# EUROPEAN PATENT SPECIFICATION

(11) **EP 1 531 104 B1**
(45) Date of publication and mention of the grant of the patent: **20.06.2012**
(21) Application number: 04026700.7
(22) Date of filing: 10.11.2004
(51) Int. Cl.: B60T 8/36, B60T 8/32, B62L 3/08

(54) **Brake force control system for motorcycle**
Bremskraftregelungssystem für ein Motorrad
Système de réglage de la force de freinage pour motocyclette

(30) Priority: 17.11.2003 JP 2003386792
(43) Date of publication of application: 18.05.2005
(73) Proprietor: HONDA MOTOR CO., LTD., Tokyo (JP)
(72) Inventor: Hirano, Akinori c/o Kabushiki Kaisha Honda Gijutsu Kenkyusho, Wako-shi, Saitama, (JP); Yamakura, Yutaka c/o Kabushiki Kaisha Honda Gijutsu Kenkyusho, Wako-shi, Saitama, (JP)
(74) Representative: Liska, Horst

(56) References cited:
- EP-A- 0 624 498
- PATENT ABSTRACTS OF JAPAN vol. 0141, no. 47 (M-0952), 20 March 1990 (1990-03-20) & JP 2 011448 A (KAWASAKI HEAVY IND LTD), 16 January 1990 (1990-01-16)
- PATENT ABSTRACTS OF JAPAN vol. 1995, no. 02, 31 March 1995 (1995-03-31) & JP 6 321078 A (SUZUKI MOTOR CORP), 22 November 1994 (1994-11-22)

## Description

The present invention relates to a brake force control system for a motorcycle.

As a conventional brake force control system for a motorcycle, one disposed between left and right seat rails has been known (see e.g. JP Patent no. 30 94 736).

FIG. 2 of JP 30 94 736 will be described referring to FIG. 11, and FIG. 3 of JP 30 94 736 will be described referring to FIG. 12. Incidentally, symbols have been renewed. Besides, as to FIG. 3 of JP 3094736, only the right half of the figure is shown.

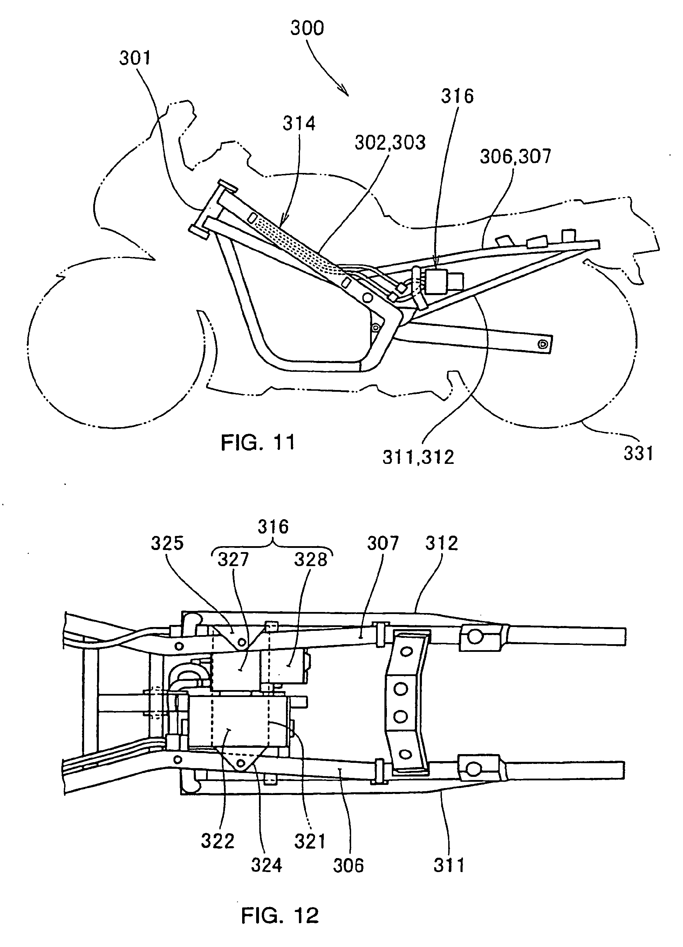

FIG. 11 is a side view of a motorcycle including a conventional brake force control system. A motorcycle 300 is a vehicle provided with a vehicle body frame 314 including a head pipe 301, left and right tank rails 302 and 303 extended rearwardly downwards from the head pipe 301, a left-right pair of seat rails 306 and 307 extended rearwards from respective middle portions of the rank rails 302 and 303, and a left-right pair of seat stays 311 and 312 extended rearwardly upwards from bent portions of the tank rails 302 and 303 and having rear ends connected to the rear ends of the seat rails 306 and 307. In the motorcycle 300, a pump unit 316 constituting the brake force control system is disposed between the seat rails 306, 307 and the seat stays 311, 312 in side view.

FIG. 12 is a plan view showing the layout of the conventional brake force control system, showing that a pump unit holder 321 is disposed bridgingly between the left and right seat rails 306 and 307, and a pump unit 316 and a battery 322 are supported by the pump unit holder 321. Incidentally, symbols 324 and 325 denote upper portion fixing portions provided at both end portions of the pump unit holder 321 for the purpose of mounting the pump unit holder 321 to the left and right seat rails 306 and 307.

The pump unit 316 is comprised of a pump 327, and a motor 328 for driving the pump 327, and the brake force control system includes the pump 327, a motor 328, and a controller, a solenoid valve and the like which are not shown in the figure.

In FIGS. 11 and 12, the pump unit 316 is disposed in the space formed between the left and right seat rails 306 and 307, so that the amount of upward movement of a rear wheel 231 must be limited for the purpose of obviating the interference between the pump unit 316 and the rear wheel 231.

In addition, since the pump unit 316 is supported by suspending it by the pump unit holder 321 between the seat rails 306 and 307, a comparatively great moment is exerted on the pump unit holder in the case where external forces causing vehicle body vertical vibration and the like are exerted from a road surface. Therefore, it is necessary to take measures such as enhancement of the rigidity of the pump unit holder 321, which may lead to increases in weight and size.

JP 02 011 448 A shows a braking force control system in accordance with the preamble of claim 1.

It is the object of the present invention to dispose a brake force control system in a motorcycle of the generic type, with which mounting and dismounting of the brake force control system is easily possible while it is rigidly supported in the mounted position.

The object is achieved by a brake force control system in a motorcycle comprising a vehicle frame of which a rear portion is comprised of a left-right pair of seat rails extended substantially horizontally rearwards, the rear ends of said seat rails being supported by the rear ends of a left-right pair of seat stays extended rearwardly upwards, and said brake force control system for controlling a brake force for a wheel, said brake force control system being disposed in the vicinity of said seat rail and said seat stay wherein said brake force control system is disposed at such a position that a central portion thereof or the center of gravity thereof substantially overlaps one of said left and right seat rails in plan view and on the lower side of said one seat rail, and said brake force control system is supported on the seat stay side and on the upper side of said seat stay, characterized in that said brake force control system is held by a bracket fixed to said seat rail, and said bracket comprises holding walls for respectively holding a front portion and left and right portions of said brake force control system only, so that the brake force control system is mountable and dismountable via the rear side of the bracket.

The brake force control system is disposed at such a position that a central portion thereof or the center of gravity thereof substantially overlaps one of the left and right seat rails and on the lower side of the one seat rail so that a rear wheel does not interfere with the brake force control system when moved upwards.

The brake force control system is supported on the seat stay side, and a central portion of the brake force control system is disposed to overlap the seat rail in plan view, so as thereby to suppress a moment acting on the seat stay side, for example, on a support member attached to the seat stay for supporting the brake force control system when a vertical force is exerted on the brake force control system.

According to the invention, the front portion and the left and right portions of the brake force control system are held by the holding walls of the bracket, whereby it is made possible to easily mount and dismount the brake force control system via the rear side of the bracket.

Preferably, the brake force control system is disposed on the inner side relative to the outermost side of a side cover for covering a side portion of a vehicle body.

For example, when the motorcycle falls down, the side cover first makes contact with the ground, whereby the brake force control system is protected.

Preferably, at least a part of the brake force control system overlaps the side cover in side view.

The brake force control system is covered with the side cover, whereby the brake force control system is protected more securely.

Preferably, a battery is disposed on the lower side of the other seat rail which is opposite to the one seat rail located on the side of the brake force control system.

The brake force control system and the battery are disposed respectively near the left and right seat rails, whereby a weight balance is secured on the left and right sides of the vehicle body.

Preferably, the brake force control system includes a pump-motor unit and a control unit, and the control unit is disposed on the outside of the vehicle body relative to the pump-motor unit.

The control unit is disposed on the outside of the vehicle body relative to the pump-motor unit, and the pump-motor unit is disposed on the inner side of the vehicle body, whereby the heavy body is located near the vehicle body center side, and concentration of mass on the vehicle body center side is contrived.

Preferably, the control unit includes a coupler portion to be connected to a harness on the vehicle body side, and the coupler portion is provided on the rear side of the pump-motor unit and on the side of a rear portion of the vehicle body.

The coupler portion is provided on the rear side of the pump-motor unit and on the side of a rear portion of the vehicle body, and is protected by the seat stay.

Here, the brake force control system is disposed at such a position that a central portion thereof or the center of gravity thereof substantially overlaps one of the left and right seat rails in plan view and on the lower side of the one seat rail. Therefore, the rear wheel does not interfere with the brake force control system even when moved upwards, and the amount of upward movement of the rear wheel can be enlarged. Therefore, in the case of an off-road vehicle, the bad road running performance can be enhanced.

The brake force control system is supported on the seat rail side, and a central portion of the brake force control system overlaps the seat rail in plan view, so that it is possible to suppress the moment acting on the seat rail side, for example, on a support member mounted to the seat rail for the purpose of supporting the brake force control system when a vertical force is exerted on the brake force control system. Therefore, the rigidity of the support member can be set low, and it is possible to contrive decreases in weight and size of the support member.

Besides, with the brake force control system disposed on the upper side of the seat rail, a flying stone and the like coming from the lower side of the brake force control system can be blocked by the seat rail, and the brake force control system can be protected.

The brake force control system is disposed on the inner side relative to the outermost side of a side cover for covering side portions of the vehicle body. Therefore, when the motorcycle falls down, for example, the side cover first makes contact with the ground, so that the brake force control system can be protected, and reliability can be enhanced.

At least a part of the brake force control system overlaps the side cover in side view, so that the brake force control system is covered with the side cover and, therefore, the brake force control system can be protected more securely.

The battery is disposed on the lower side of the other seat rail opposite to the one seat rail located on the side of the brake force control system, so that a good weight balance is obtained on the left and right sides of the vehicle body.

The front portion and the left and right portions of the brake force control system are held by the holding walls of the bracket, so that the brake force control system can be mounted and dismounted via the rear side of the bracket.

The control unit is disposed on the outside of the vehicle body relative to the pump-motor unit, and the pump-motor unit is disposed on the inner side of the vehicle body, so that the pump-motor unit as a heavy body can be disposed near the vehicle body center side, and concentration of mass on the vehicle body center side can be contrived.

The coupler portion is provided on the rear side of the pump-motor unit and on the side of a rear portion of the vehicle body, so that the coupler portion can be protected by the seat stay, there is no need for a protective member for exclusive use for the coupler portion, and a reduction in cost can be achieved.

The best mode for carrying out the present invention will be described below based on the accompanying drawings. Incidentally, the drawings are to be looked at according to the posture of symbols.
FIG. 1 is a side view of a motorcycle comprising a brake force control system according to the present invention.
FIG. 2 is a diagram showing the configuration of a brake device according to the present invention.
FIG. 3 is a diagram showing in detail the configuration of the brake device according to the present invention.
FIG. 4 is a side view of an essential part of a vehicle body rear portion showing the layout of a modulator according to the present invention.
FIG. 5 is a side view showing a support structure for the modulator according to the present invention.
FIG. 6 is a back elevation showing a bracket according to the present invention.
FIG. 7 is a plan view of an essential part of a vehicle body rear portion showing the layout of the modulator according to the present invention.
FIG. 8 is a plan view for illustrating the bracket for supporting the modulator according to the present invention.
FIG. 9 is a first functional view showing the function of the layout of the modulator according to the present invention.
FIG. 10 is a second functional view showing the function of the layout of the modulator according to the present invention.
FIG. 11 is a side view of a motorcycle comprising a conventional brake force control system.
FIG. 12 is a plan view showing the layout of the conventional brake force control system.

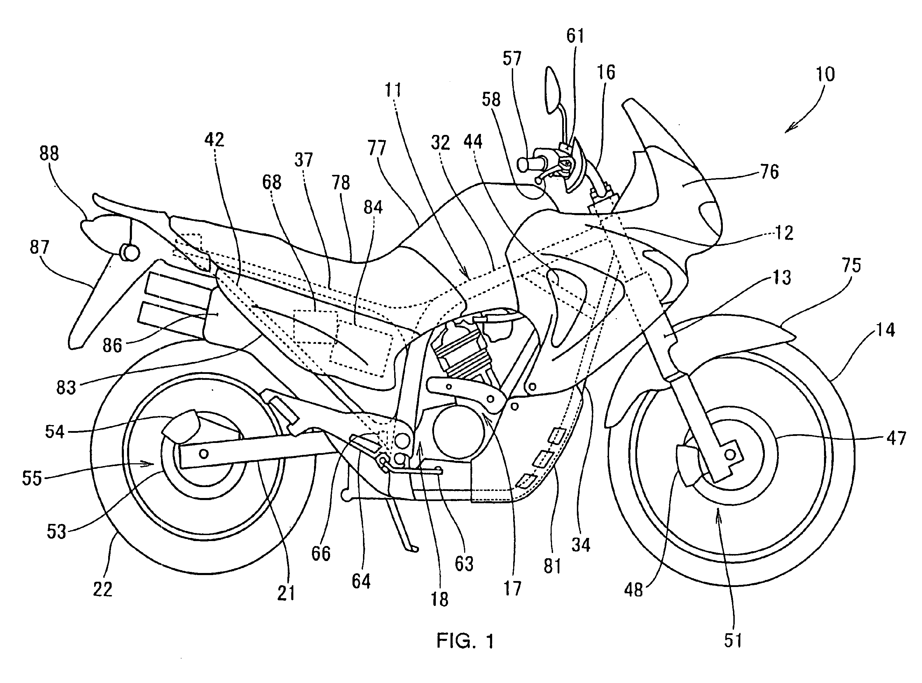

FIG. 1 is a side view of a motorcycle including a brake force control system according to the present invention. The motorcycle 10 is a vehicle in which a front fork 13 is steerably mounted to a head pipe 12 provided at the front end of a vehicle body frame 11, a front wheel 14 is mounted to lower portions of the front fork 13, a steering bar handle 16 is attached to an upper portion of the front fork 13, an engine 17 and a transmission 18 integrally connected to the engine 17 are mounted on the inside of the vehicle body frame 11, a swing arm 21 is vertically swingably mounted to a lower portion of the vehicle body frame 11, and a rear wheel 22 is mounted to the rear end of the swing arm 21. In addition, an anti-lock brake system (ABS) described below is mounted on the vehicle for the purpose of preventing the front wheel 14 and the rear wheel 22 from being locked at the time of braking.

The vehicle body frame 11 is comprised of left and right main frames 31 and 32 (only symbol 32 on the viewer's side is shown) extended rearwardly downwards from the head pipe 12, left and right down frames 33 and 34 (only symbol 34 on the viewer's side is shown) extended substantially downwards from the head pipe 12 and then rearwards and connected respectively to the lower ends of the main frames 31 and 32, a left-right pair of seat rails 36 and 37 (only symbol 37 on the viewer's side is shown) extended substantially horizontally rearwards from bent portions of the main frames 31 and 32, and a left-right pair of seat stays 41 and 42 (only symbol 42 on the viewer's side is shown) extended rearwardly upwards from respective lower portions of the main frames 31 and 32 and connected to the rear ends of the seat rails 36 and 37. Incidentally, symbols 43 and 44 (only symbol 44 on the viewer's side is shown) denote reinforcing frames disposed bridgingly between the main frames 31, 32 and the down frames 33, 34.

The front wheel 14 is fitted with a brake disk 47. A front wheel disk brake 51 is constituted of the brake disk 47, and a brake caliper 48 attached to the front fork 13 for the purpose of braking by clamping the brake disk 47.

The rear wheel 22 is fitted with a brake disk 53. A rear wheel disk brake 55 is constituted of the brake disk 53, and a brake caliper 54 attached to the swing arm 21 through a bracket for the purpose of braking by clamping the brake disk 53.

The steering bar handle 16 is a component part fitted with a throttle grip 57 for regulating the opening of a throttle provided in an intake system of the engine 17, a front wheel brake lever 58 for braking the front wheel 14, and a first master cylinder 61 for generating a brake liquid pressure when the front wheel brake lever 58 is operated.

Symbol 63 denotes a rear wheel brake pedal for braking the rear wheel 22. A bracket 64 is attached to a lower portion of the main frame 32, and the rear wheel brake pedal 63 is mounted to the bracket 64.

Symbol 66 denotes a second master cylinder for generating a brake liquid pressure when the rear wheel brake pedal 63 is operated.

Symbol 68 denotes a modulator as the brake force control system constituting the ABS, for preventing the locking of the front wheel 14 and the rear wheel 22 by regulating the brake forces acting on the front wheel 14 and the rear wheel 22.

Here, symbol 75 denotes a front fender for covering the upper side of the front wheel 14, symbol 76 denotes a front cowl for covering a front portion of the vehicle body, symbol 77 denotes a fuel tank attached to upper portions of the main frames 31, 32, symbol 78 denotes a seat attached to upper portions of the seat rails 36, 37, symbol 81 denotes an engine guard for covering the front side of the engine 17, symbols 82 and 83 (only symbol 83 on one side is shown) denote side covers for covering the lateral sides of the space between the seat rails 36, 37 and the seat stays 41, 42 on the lower side of the seat 78, symbol 84 denotes a battery, symbol 86 denotes a muffler, symbol 87 denotes a rear fender for covering the upper side of the rear wheel 22, and symbol 88 denotes a tail lamp.

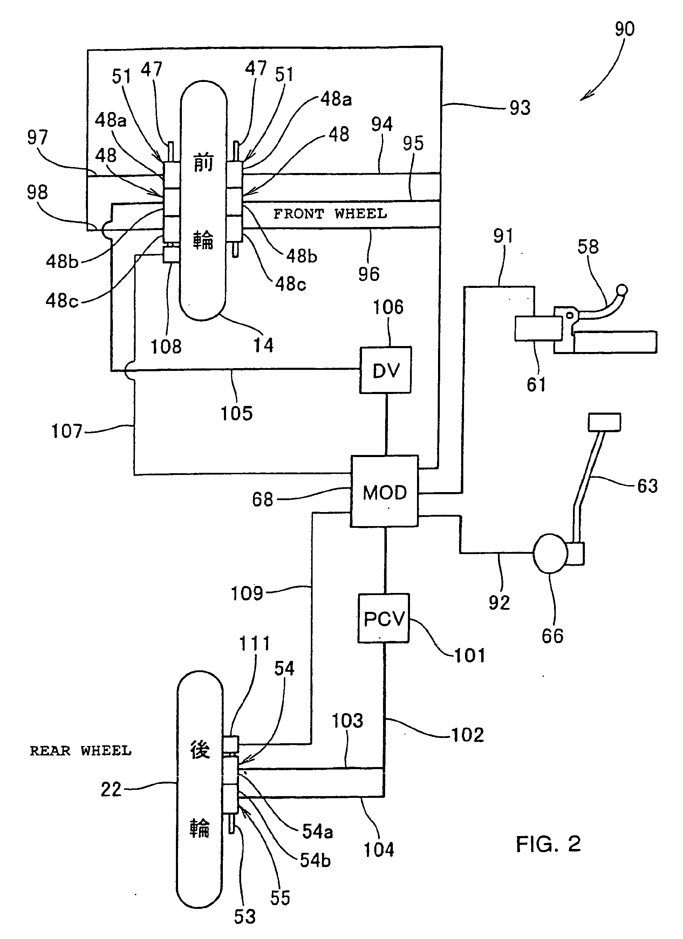

FIG. 2 is a diagram showing the configuration of a brake device according to the present invention. The brake device 90 is comprised of the above-mentioned front wheel brake lever 58, the first master cylinder 61, the rear wheel brake pedal 63, the second master cylinder 66, the modulator 68 connected to the first master cylinder 61 and the second master cylinder 66 through pipings 91 and 92 respectively, the front disk brakes 51, 51 (specifically, brake calipers 48, 48) connected to the modulator 68 through pipings 93 to 98, the rear wheel disk brakes 55 (specifically, a brake caliper 54) connected to the modulator 68 via a pressure control valve (PCV) 101 for controlling the brake liquid pressure and through pipings 102 to 104, a delay valve (DV) 106 provided at an intermediate portion of a piping 105 for connecting the front wheel disk brake 51 on one side (specifically, the brake caliper 48 on one side) and the modulator 68 for the purpose of distributing the brake liquid pressure also to the front wheel disk brake 51 and delaying the supply of the liquid pressure to the side of the front wheel disk brake 51 relative to the side of the rear wheel disk brake 55 when the rear wheel brake pedal 63 is operated, a front wheel speed sensor 108 connected to the modulator 68 through a piping 107 for the purpose of detecting the rotating speed (namely, wheel speed) of the front wheel 14, and a rear wheel speed sensor 111 connected to the modulator 68 through a piping 109 for the purpose of detecting the rotating speed of the rear wheel 22.

Here, symbols 48a, 48b and 48c denote cylinders provided in the brake caliper 48 for the purpose of movably containing therein a piston for generating a pressing force for clamping the brake disk 47, and symbols 54a and 54b denote cylinders provided in the brake caliper 54 for the purpose of containing therein a piston for generating a pressing force for clamping the brake disk 53. In addition, in the figure, the pipings for the brake liquid are indicated by bold lines, while conductors are indicated by thin lines (this applies here and hereafter) .

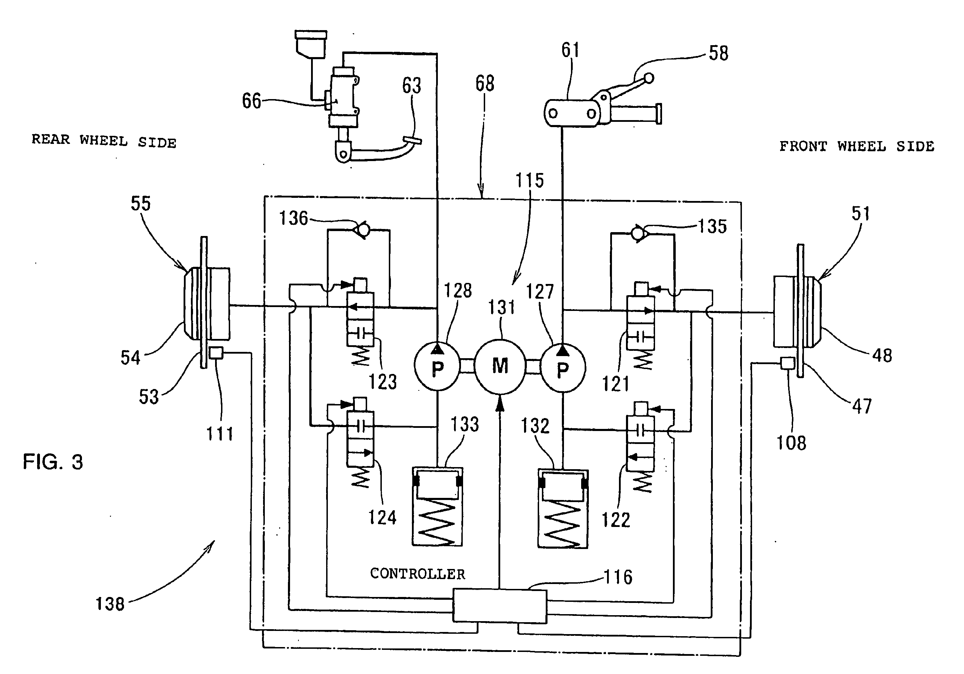

FIG. 3 is a diagram showing in detail the brake device according to the present invention, in which the modulator 68 as the brake force control system of the present invention includes an ABS liquid pressure controller 115 and a control unit 116 for controlling the ABS liquid pressure controller 115.

The ABS liquid pressure controller 115 includes front wheel side solenoid valves 121, 122, rear wheel side solenoid valves 123, 124, pumps 127, 128 for generating ABS brake liquid pressures, a motor 131 for driving the pumps 127, 128, reservoirs 132, 133 for reserving the brake liquid, and check valves 135, 136 for flowing the brake liquid in one direction when a brake liquid pressure exceeding a set brake liquid pressure is exerted.

The front wheel side solenoid valve 121 and the rear wheel solenoid valve 123 are valves which are kept open at the time of a normal braking operation conducted by operating the front wheel brake lever 58 and the rear wheel brake pedal 63 without operating the ABS.

The front wheel solenoid valve 122 and the rear wheel solenoid valve 124 are valves which are kept closed at the time of the normal braking operation conducted by operating the front wheel brake lever 58 and the rear wheel brake pedal 63 without operating the ABS.

The controller 116 is a device for controlling the operations of the solenoid valves 121 to 124 and the motor 131.

The front wheel speed sensor 108 and the rear wheel speed sensor 111 are, for example, electromagnetic induction type sensors.

The modulator 68, the front wheel speed sensor 108 and the rear wheel speed sensor 111 constitute the ABS 138.

The ABS 138 is a device for preventing the wheel locking which might occur at the time of rapid braking or at the time of braking on a slippery road surface.

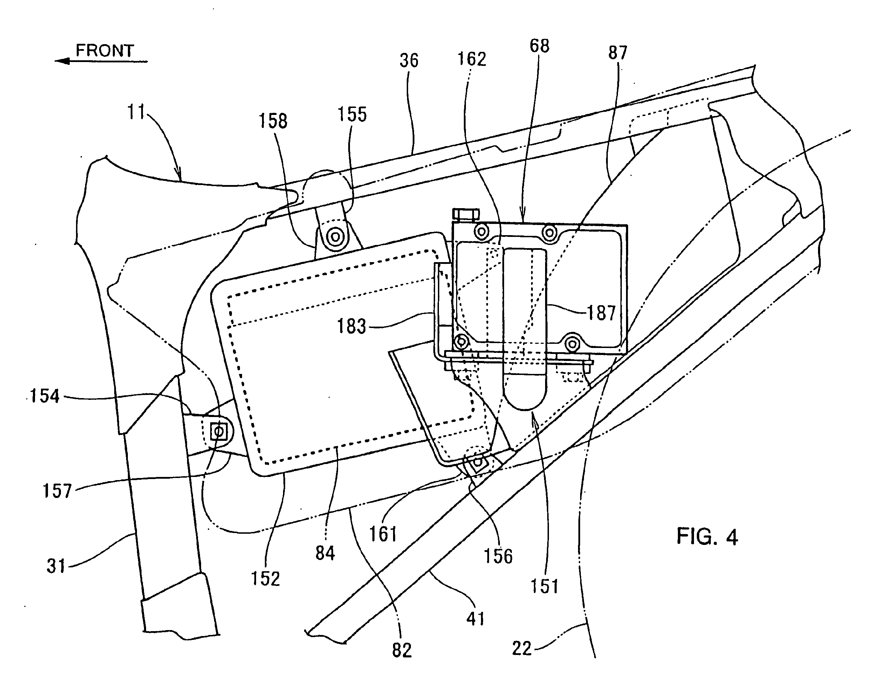

FIG. 4 is a side view of an essential part of a vehicle body rear portion showing the layout of the modulator according to the present invention (the arrow (FRONT) in the figure indicates the front side of the vehicle, here and hereinafter), and shows that the modulator 68 (the portion outlined with bold solid line) is mounted through a bracket 151 to the seat stay 41 on the vehicle body left side of the left-right pair of seat stays 41 and 42 (for symbol 42, see FIG. 1), and the modulator 68 is disposed on the lower side of the seat rail 36 on the vehicle body right side of the left-right pair of seat rails 36 and 37 (for symbol 37, see FIG. 1).

In addition, it is shown that a battery case 152 is mounted to the seat rail 37 on the vehicle body right side, the seat stay 42 on the vehicle body right side, the main frame 32 (see FIG. 1) and a frame (not shown), and a battery 84 (the portion outlined with bold broken line) is contained in the battery case 152. Incidentally, symbols 154 to 156 denote support portions provided on the side of the vehicle body frame 11 for the purpose of supporting the battery case 152, symbols 157, 158, 161 and 162 denote mount portions provided on the battery case 152 for the purpose of mounting the battery case 152 to the support portions 154 to 156.

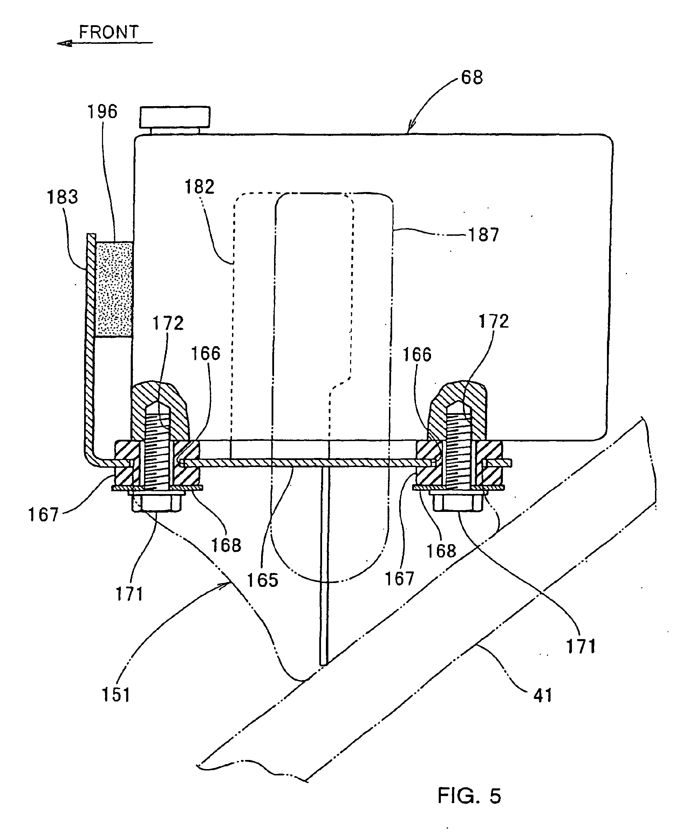

FIG. 5 is a side view showing a support structure for the modulator according to the present invention (the arrow (LEFT) in the figure indicates the vehicle body left side, and the arrow (RIGHT) indicates the vehicle body right side), and shows that a bracket 151 is attached to an upper portion of the seat stay 41, a flat portion 165 provided in the bracket 151 is provided with mount holes 166 ··· (··· indicates plurality, here and hereafter), a cushion rubber 167 is fitted in each of the mount holes 166 ···, a washer 168 is abutted on the lower surface of each of the cushion rubbers 167· · ·, a bolt 171 is made to penetrate through the washer 168 and the cushion rubber 167, and the bolts 171 ··· are each screw-engaged into female screw 172 provided in the modulator 68, whereby the modulator 68 is mounted to and elastically supported on the bracket 151.

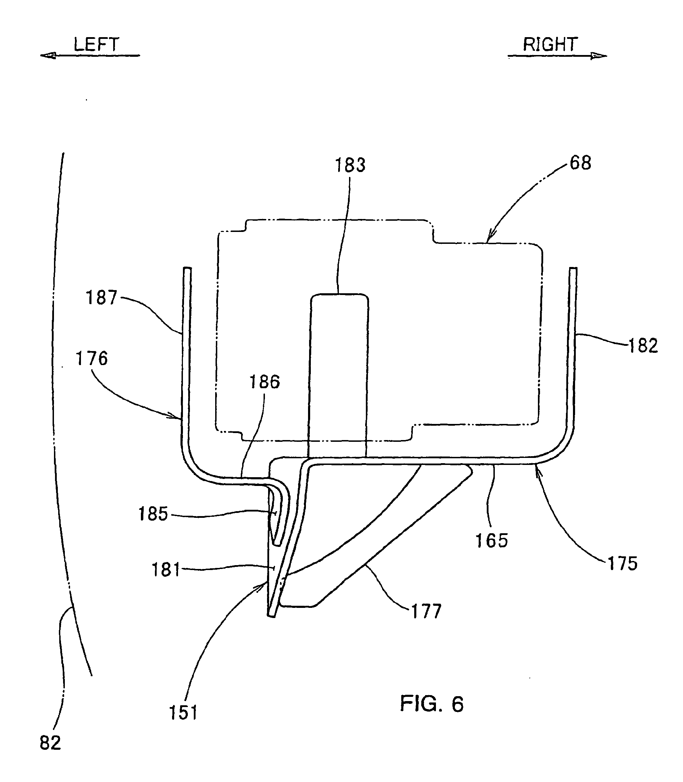

FIG. 6 is a back elevation showing the bracket for supporting the modulator according to the present invention, and shows that a lateral side of the modulator 68 and the bracket 151 is covered with a side cover 82.

The bracket 151 is comprised of a bracket main body 175 provided with the above-mentioned flat portion 165, a crank-shaped plate 176 attached to a lower side surface of the bracket main body 175, and a reinforcing plate 177 inclinedly attached to a lower portion of the bracket main body 175 for the purpose of reinforcing the bracket main body 175.

The bracket main body 175 includes the flat portion 165, a lower vertical portion 181 bent substantially vertically downwards from the left end of the flat portion 165, a right plate portion 182 bent substantially vertically upwards from the right end of the flat portion 165, and a front plate portion 183 bent substantially vertically upwards from the front end of the flat portion 165.

The crank-shaped plate 176 includes a vertical mount portion 185 mounted to the lower vertical portion 181 of the bracket main body 175, a horizontal portion 186 extended substantially horizontally from the upper end of the vertical mount portion 185, and a left plate portion 187 extended substantially vertically upwards from the left end of the horizontal portion 186.

The right plate portion 182, the front plate portion 183 and the left plate portion 187 mentioned above are disposed to front on and in the vicinity of the right side surface, the front surface and the left side surface of the modulator 68.

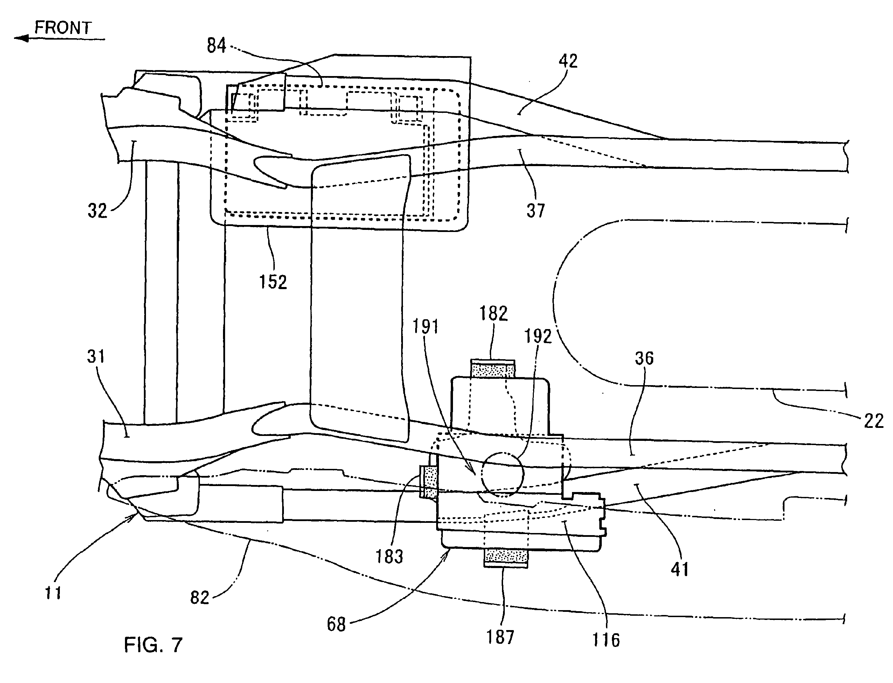

FIG. 7 is a plan view showing an essential part of a vehicle body rear portion showing the layout of the modulator according to the present invention, and shows that the modulator 68 (the portion outlined with bold solid line) is disposed so as to substantially overlap the seat rail 36 and the seat stay 41, and the battery 84 (the portion outlined mostly with bold broken line) is disposed so as to substantially overlap the seat rail 37 and the seat stay 42, whereby the modulator 68 and the battery 84 do not overlap the rear wheel 22.

With the modulator 68 and the battery 84 thus disposed on the left and right sides of the vehicle body frame 11, the two heavy component parts can be disposed with a good balance, and since the modulator 68 and the battery 84 do not overlap the rear wheel 22, the amount of upward movement of the rear wheel 22 can be enlarged.

The modulator 68 includes the above-mentioned controller 116 disposed on the outside in the vehicle width direction, and a pump-motor unit 191 disposed on the inside in the vehicle width direction relative to the controller 116.

The pump-motor unit 191 is a portion containing therein the above-mentioned pumps 127, 128 (see FIG. 3), a motor 131 (see FIG. 3) and the like. The circular mark 192 indicated by two-dotted chain line in the figure is a central portion of the modulator 68 in plan view, and also is the position of the center of gravity in this example. Even in the case where the central portion and the center of gravity differ from each other, it naturally suffices that either one of them is disposed on the lower side of the seat rail 36.

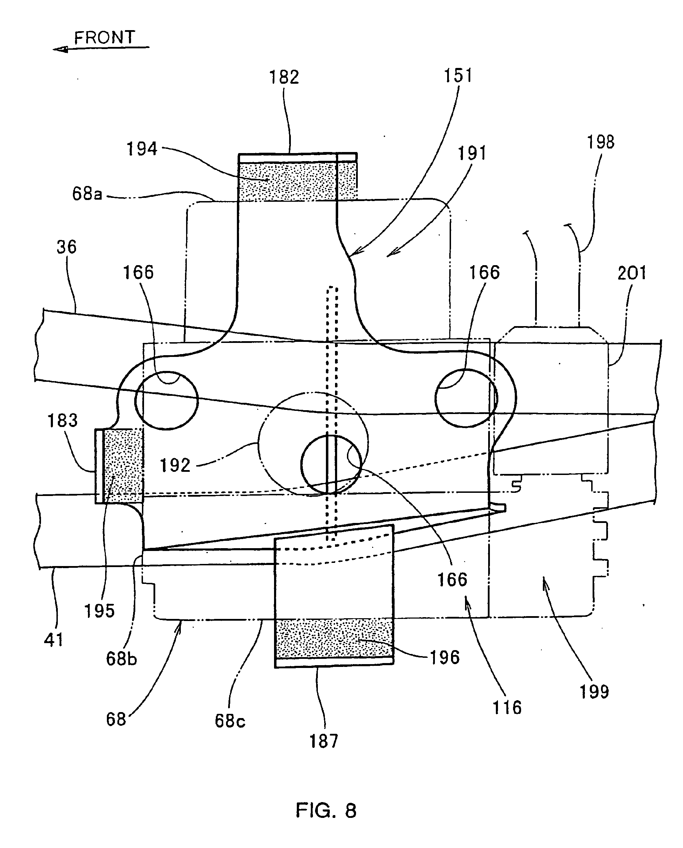

FIG. 8 is a plan view for illustrating the bracket for supporting the modulator according to the present invention, and shows that the bracket 151 is provided with the right plate portion 182, the front plate portion 183 and the left plate portion 187, the right side surface 68a, the front surface 68b and the left side surface 68c of the modulator 68 are supported by the right plate portion 182, the front plate portion 183 and the left plate portion 187 through elastic materials 194, 195 and 196, and the three mount holes 166 in the bracket 151 are arranged at the vertexes of a triangle.

A plate portion for supporting the modulator 68 is not provided at a rear portion of the bracket 151, since the modulator 68 is to be mounted to the bracket 151 from the rear side.

The mount holes 166 are arranged at the vertexes of a triangle, so as to ensure that the modulator 68 is securely supported by the bracket 151 in both the front-rear direction of the vehicle and the left-right direction of the vehicle.

Here, symbol 198 denotes a harness for supplying the controller 116 with various signals or for sending various signals from the controller 116 to other component part, symbol 201 denotes a connector for connecting the harness 198 to the controller 116, and symbol 199 denotes a coupler portion provided at a rear portion of the controller 116 for connecting the connector 201.

Functions relating to the layout of the modulator 68 as above-mentioned will be described below.

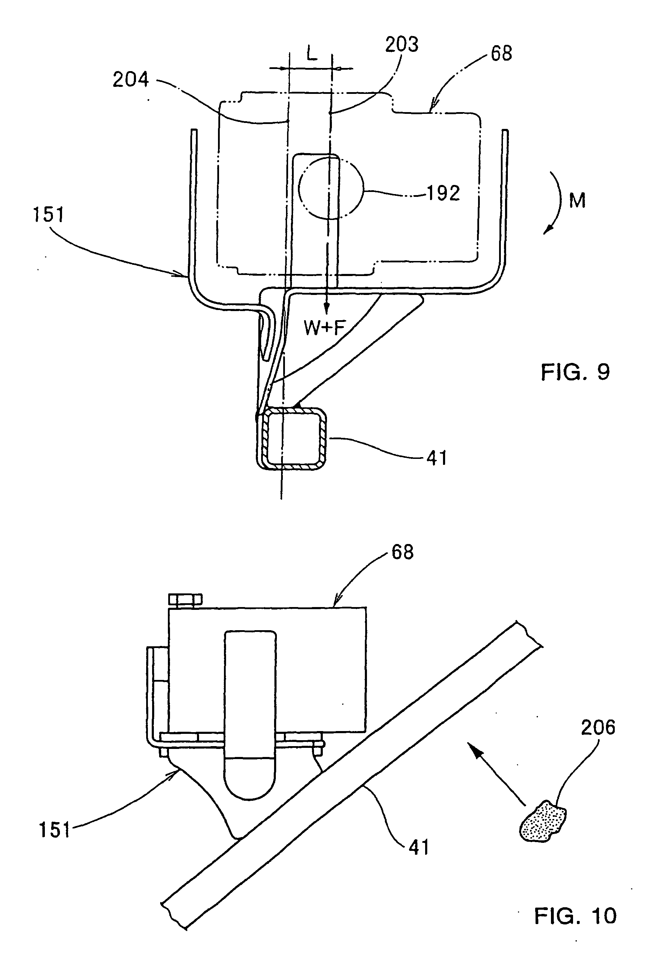

FIG. 9 is a first functional view for illustrating the function of the layout of the modulator according to the present invention.

In the figure, there is shown a circular mark 192 which indicates a central portion, or a portion including the center of gravity, of the modulator 68.

A vertical straight line 203 passing through the center of the circular mark 192 is spaced by a distance L to the inner side in the vehicle width direction from a vertical straight line 204 passing through the center of the seat stay 41.

In a system in which an ABS pump unit is disposed between left and right seat rails as in the prior art, the pump unit is disposed on the inner side relative to a seat stay disposed substantially on the lower side of the seat rail.

In the present invention, the above-mentioned distance L is set small, whereby the modulator 68 can be disposed substantially on the upper side of the seat stay 41, and, where the weight W of the modulator 68 and an external force F at the time of vertical movement or vertical vibration of the vehicle are exerted on the circular mark 192, the moment M (= (W+F) X L) acting on the bracket 151 can be reduced, as compared with that in the prior art.

Therefore, the rigidity of the bracket 151 can be set lower, and it is possible to contrive decreases in weight and size of the bracket 151.

FIG. 10 is a second functional view for illustrating the function of the layout of the modulator according to the present invention.

The modulator 68 is mounted through the bracket 151 to an upper portion of the seat stay 41 inclined rearwardly upwards, i.e., is disposed on the upper side of the seat stay 41. Therefore, even when a flying stone 206 comes from the rear side of the vehicle, the lower side of the vehicle or the rear lower side of the vehicle toward the modulator 68, the flying stone 206 is blocked by the seat stay 41, so that collision of the flying stone 206 against the modulator 68 can be prevented.

As has been described above referring to FIGS. 1 and 7, the present invention is firstly characterized in that, in the motorcycle 10 including the vehicle body frame 11 of which a rear portion is composed of the left-right pair of seat rails 36, 37 extended substantially horizontally rearwards, the rear ends of the seat rails 36, 37 being supported by the rear ends of the left-right pair of seat stays 41, 42 extended rearwardly upwards, and the modulator 68 for controlling the brake forces for the front wheel 14 and the rear wheel 22, the modulator 68 being disposed in the vicinity of the seat rail 36 and the seat stay 41, the modulator 68 is disposed at such a position that the portion of the circular mark 192 as the central portion thereof substantially overlaps one of the left and right seat rails 36 and 37 in plan view and on the lower side of the seat rail 36.

With the modulator 68 disposed so as to substantially overlap the seat rail 36, it is ensured that the rear wheel 22 does not interfere with the modulator 68 even when moved upwards, and the amount of upward movement of the rear wheel 22 can be enlarged. Therefore, in the case of an off-road vehicle, for example, the bad road running performance can be enhanced.

The present invention is secondly characterized in that the modulator 68 is supported on the side of the seat stay 41 and is disposed on the upper side of the seat stay 41, as has been described referring to FIGS. 4, 9 and 10.

It is possible to suppress the moment acting on the side of the seat stay 41, for example, on the bracket 151 as a support member attached to the seat stay 41 for the purpose of supporting the modulator 68 when a vertical force acts on the modulator 68.

In addition, with the modulator 68 disposed on the upper side of the seat stay 41, a flying stone 206 and the like coming from the lower side of the modulator 68 can be blocked by the seat stay 41, so that the modulator 68 can be protected.

The present invention is thirdly characterized in that the modulator 68 is disposed on the inner side relative to the outermost side of the side cover 82 for covering a side portion of the vehicle body, as has been described referring to FIG. 6.

For example, in the case where the motorcycle 10 (see FIG. 1) falls down, the side cover 82 first makes contact with the ground, so that the modulator 68 can be protected, and reliability can be enhanced.

The present invention is fourthly characterized in that at least a part of the modulator 68 overlaps the side cover 82 in side view, as has been described referring to FIG. 7.

Since the modulator 68 is entirely covered with the side cover 82, the modulator 68 can be protected more securely.

The present invention is fifthly characterized in that the battery 84 is disposed on the lower side of the other seat rail 37 opposite to the one seat rail 36 located on the side of the modulator 68, as has been described referring to FIGS. 4 and 7.

With the modulator 68 and the battery 84 disposed respectively on the lower side of the left and right seat rails 36 and 37, it is possible to obtain a good weight balance on the left and right sides of the vehicle body.

The present invention is sixthly characterized in that the modulator 68 is held by the bracket 151 fixed to the seat stay 41, and the bracket 151 is provided with the front plate portion 183, the left plate portion 187, and the right plate portion 182 as holding walls for respectively holding the front surface 68b as a front portion and the left side surface 68c and the right side surface 68a as left and right portions of the modulator 68, as has been described referring to FIGS. 4 and 8.

Since the front surface 68b, the left side surface 68c, and the right side surface 68a of the modulator 68 are held by the holding walls 183, 187, 182 of the bracket 151, the modulator 68 can be mounted and dismounted via the rear side of the bracket 151.

The present invention is seventhly characterized in that the modulator 68 is composed of the pump-motor unit 191 and the controller 116 as a control unit, and the controller 116 is disposed on the outside of the vehicle body relative to the pump-motor unit 191, as has been described referring to FIG. 7.

Since the controller 116 is disposed on the outside of the vehicle body relative to the pump-motor unit 191 and the pump-motor unit 191 is disposed on the inner side of the vehicle body, the pump-motor portion 191 which is a heavy component part can be disposed near the vehicle body center side, and concentration of mass to the vehicle body center side can be contrived.

The present invention is eighthly characterized in that the controller 116 is provided with the coupler portion 199 to be connected to the harness 198 on the vehicle body side, and the coupler portion 199 is provided at a rear portion of the controller 116 on the rear side relative to the pump-motor unit 191, as has been described referring to FIGS. 4 and 8.

With the coupler portion 199 provided on the rear side relative to the pump-motor unit 191 and at a rear portion of the controller 116, the coupler portion 199 can be protected with the seat stay 41, there is no need for a protective member for exclusive use for the coupler portion, and cost can be suppressed.

The brake force control system according to the present invention is suitable for application to ABS for motorcycles and three-wheel vehicles.

In relation to a brake force control system for a motorcycle, to make it possible to secure a large amount of upward movement of a rear wheel, and to contrive decreases in weight and size of a support member for supporting the brake force control system.

In a motorcycle including a vehicle body frame 11 of which a rear portion is composed of a left-right pair of seat rails 36, 37 extended substantially horizontally rearwards, the rear ends of the seat rails 36, 37 being supported by the rear ends of a left-right pair of seat stays 41, 42 extended rearwardly upwards, and a modulator 68 for controlling brake forces for a front wheel and a rear wheel 22, the modulator 68 being disposed in the vicinity of the seat rail 36 and the seat stay 41, the modulator 68 is disposed at such a position that a central portion thereof or a portion of the circular mark 192 as the center of gravity thereof substantially overlaps the seat rail 36 on one side in plan view and on the lower side of the seat rail 36.

## Claims

1. A brake force control system for a motorcycle comprising a vehicle frame (11) of which a rear portion is comprised of a left-right pair of seat rails (36, 37) extended substantially horizontally rearwards, the rear ends of said seat rails (36, 37) being supported by the rear ends of a left-right pair of seat stays (41, 42) extended rearwardly upwards, and said brake force control system (68) for controlling a brake force for a wheel (22), said brake force control system (68) being mountable in the vicinity of said seat rail (36) and said seat stay (41) when mounted wherein
said brake force control system (68) is disposed at such a position that a central portion (192) thereof or the center of gravity thereof substantially overlaps one (36) of said left and right seat rails in plan view and on the lower side of said one seat rail (36) when mounted, and
said brake force control system (68) is supported on the seat stay side and on the upper side of said seat stay (41) when mounted.
**characterized in that** said brake force control system (68) is held by a bracket (151) fixed to said seat rail (36) when mounted, and said bracket (151) comprises holding walls (182, 183, 187) for respectively holding a front portion and left and right portions of said brake force control system (68) only, so that the brake force control system (68) is mountable and dismountable via the rear side of the bracket (151).

2. The brake force control system as set forth in claim 1, wherein said brake force control system (68) is disposed on the inner side relative to the outermost side of a side cover (82) for covering a side portion of a vehicle body when mounted.

3. The brake force control system as set forth in claim 2, wherein at least a part of said brake force control system (68) overlaps said side cover (82) in side view when mounted.

4. The brake force control system as set forth in any of claims 1 to 3, wherein a battery (84) is disposed on the lower side of the other seat rail (37) which is opposite to the one seat rail (36) located on the side of said brake force control system (68) when mounted.

5. The brake force control system as set forth in claim 1, wherein said brake force control system (68) is comprised of a pump-motor unit (191) and a control unit (116), and said control unit (116) is mountable on the outside of a vehicle body.

6. The brake force control system as set forth in claim 5, wherein said control unit (116) comprises a coupler portion (199) to be connected to a harness (198) on the vehicle body side, and said coupler portion (199) is provided on the side of a rear portion of said vehicle body on the rear side of said pump-motor unit (191) when the pump-motor unit (191) is mounted.

## Patentansprüche

1. Bremskraftregelungssystem für ein Kraftrad, das einen Fahrzeugrahmen (11) aufweist, dessen hinterer Abschnitt aus einem links-rechts Paar von Sitzschienen (36, 37) aufgebaut ist, die sich im Wesentlichen horizontal nach hinten erstrecken, wobei die Hinterenden der Sitzschienen (36, 37) durch die Hinterenden eines links-rechts-Paars von Sitzstreben (41, 42) gestützt sind, die sich nach hinten aufwärts erstrecken, und das Bremskraftregelungssystem (68) zum Steuern/Regeln einer Bremskraft für ein Rad (22), wobei das Bremskraftregelungssystem (68) in der Nähe der Sitzschiene (36) und der Sitzstrebe (41) montierbar ist, worin, wenn es montiert ist, das Bremskraftregelungssystem (68), in einer solchen Position, dass in Draufsicht sein mittlerer Abschnitt (192) oder sein Schwerpunkt eine (36) der linken und rechten Sitzschienen im Wesentlichen überlappt und an der Unterseite der einen Sitzschiene (36) angeordnet ist, wenn es montiert ist, und
das Bremskraftregelungssystem (68), wenn es montiert ist, an der Sitzstrebenseite und an der Oberseite der Sitzstrebe (41) gelagert ist,
**dadurch gekennzeichnet, dass** das Bremskraftregelungssystem (68), wenn es montiert ist, von einem an der Sitzschiene (36) befestigten Träger (131) gehalten wird, und der Träger (151) Haltewände (182, 183, 187) aufweist, um jeweils nur einen vorderen Abschnitt und linke und rechte Abschnitte des Bremskraftregelungssystems (68) zu halten, so dass das Bremskraftregelungssystem (68) über die Rückseite des Trägers (151) montierbar und abmontierbar ist.

2. Das Bremskraftregelungssystem nach Anspruch 1, worin das Bremskraftregelungssystem (68), wenn es montiert ist, an der Innenseite im Bezug auf die äußerste Seite eines Seitendeckels (82) zum Abdecken eines Seitenabschnitts des Fahrzeugkörpers angeordnet ist.

3. Das Bremskraftregelungssystem nach Anspruch 2, worin zumindest ein Teil des Bremskraftregelungssystems (68), wenn es montiert ist, den Seitendeckel (82) in Seitenansicht überlappt.

4. Das Bremskraftregelungssystem nach einem der Ansprüche 1 bis 3, worin eine Batterie (84) an der Unterseite der anderen Sitzschiene (37) angeordnet ist, die der einen Sitzschiene (36) entgegengesetzt ist, die sich an der Seite des Bremskraftregelungssystems (68), wenn es montiert ist, befindet.

5. Das Bremskraftregelungssystem nach Anspruch 1, worin das Bremskraftregelungssystem (68) aus einer Pumpenmotoreinheit (191) und einer Steuerungseinheit (116) aufgebaut ist, und die Steuerungseinheit (116) an der Außenseite eines Fahrzeugkörpers montierbar ist.

6. Das Bremskraftregelungssystem nach Anspruch 5, worin die Steuerungseinheit (116) einen Kupplungsabschnitt (199) zur Verbindung mit einem Kabel (198) seitens des Fahrzeugkörpers umfasst, und der Kupplungsabschnitt (199) seitens eines hinteren Abschnitts des Fahrzeugkörpers an der Rückseite der Pumpenmotoreinheit (199), wenn die Pumpenmotoreinheit (191) montiert ist, vorgesehen ist.

## Revendications

1. Système de réglage de la force de freinage d'une motocyclette comprenant un châssis de véhicule (11) dont une partie arrière comprend une paire gauche-droite de rails de siège (36, 37) s'étendant essentiellement horizontalement vers l'arrière, les extrémités arrières desdits rails de siège (36, 37) étant supportées par les extrémités arrières d'une paire gauche-droite de montants de siège (41, 42) s'étendant vers l'arrière et vers le haut, et ledit système de réglage de la force de freinage (68) pour contrôler une force de freinage pour une roue (22), ledit système de réglage de la force de freinage (68) pouvant être monté à proximité dudit rail de siège (36) et dudit montant de siège (41) lorsqu'il est monté, dans lequel ledit système de réglage de la force de freinage (68) est disposé à une position telle qu'une partie centrale (192) de celui-ci ou le centre de gravité de celui-ci recouvrent sensiblement un (36) desdits rails de siège gauche et droit en vue en plan et du côté inférieur dudit un rail de siège (36) lorsqu'il est monté, et ledit système de réglage de la force de freinage (68) est supporté sur le côté du montant de siège et sur le côté supérieur dudit montant de siège (41) lorsqu'il est monté,
**caractérisé en ce que** ledit système de réglage de la force de freinage (68) est maintenu par une console (151) fixée audit rail de siège (36) lorsqu'il est monté, et ladite console (151) comprenant des parois de retenue (182, 183, 187) pour maintenir respectivement une partie frontale et des parties gauche et droite dudit système de réglage de la force de freinage (68) uniquement, de sorte que le système de réglage de la force de freinage (68) peut être monté et démonté par le côté arrière de la console (151).

2. Système de réglage de la force de freinage tel que défini dans la revendication 1, dans lequel ledit système de réglage de la force de freinage (68) est disposé du côté intérieur relativement au côté le plus extérieur d'un capot latéral (82) pour couvrir une partie latérale d'une carrosserie du véhicule lorsqu'il est monté.

3. Système de réglage de la force de freinage tel que défini dans la revendication 2, dans lequel au moins une partie dudit système de réglage de la force de freinage (68) recouvre ledit capot latéral (82) dans la vue latérale lorsqu'il est monté.

4. Système de réglage de la force de freinage tel que défini dans les revendications 1 à 3, dans lequel une batterie (84) est disposée du côté inférieur de l'autre rail de siège (37) qui est opposé au rail de siège (36) situé du côté dudit système de réglage de la force de freinage (68) lorsqu'il est monté.

5. Système de réglage de la force de freinage tel que défini dans la revendication 1, dans lequel ledit système de réglage de la force de freinage (68) comprend une unité pompe-moteur (191) et une unité de commande (116) et ladite unité de commande (116) peut être montée à l'extérieur de la carrosserie du véhicule.

6. Système de réglage de la force de freinage tel que défini dans la revendication 5, dans lequel ladite unité de commande (116) comprend une partie de couplage (199) à connecter à un harnais (198) du côté de la carrosserie du véhicule et ladite partie de couplage (199) est montée du côté d'une partie arrière de ladite carrosserie du véhicule à l'arrière de ladite unité pompe-moteur (191) lorsque l'unité pompe-moteur (191) est montée.
